Europäisches Patentamt

(19) European Patent Office

Office européen des brevets

(11) Publication number: **0 269 461**
**A2**

## (12) EUROPEAN PATENT APPLICATION

(21) Application number: **87310500.1**

(22) Date of filing: **27.11.87**

(51) Int. Cl.⁴: **A 23 L 1/31**

(30) Priority: **28.11.86 GB 8628488**

(43) Date of publication of application:
**01.06.88 Bulletin 88/22**

(84) Designated Contracting States:
**AT BE CH DE ES FR GB GR IT LI LU NL SE**

(71) Applicant: **JOHNSON & JOHNSON**
**One Johnson & Johnson Plaza**
**New Brunswick, NJ 08933-7003 (US)**

(72) Inventor: **Holt, Alan**
**11 Manor Road**
**Salford Manchester, M6 8QN (GB)**

**Holt, Roger James**
**11 Orama Avenue**
**Salford Manchester, M6 8LL (GB)**

(74) Representative: **Fisher, Adrian John et al**
**CARPMAELS & RANSFORD 43 Bloomsbury Square**
**London WC1A 2RA (GB)**

(54) **Meat product.**

(57) Tough interconnective tissue removed from pieces of meat is comminuted, converted into an emulsion with a consumable liquid, and added back to the lean pieces of meat to coat them and act as binder when they are moulded into a coherent body (10). The need for lengthy tumbling and addition of chemical additives is obviated and the appearance and texture of the meat is preserved.

The resulting product may optionally be frozen, sliced and enrobed by a basting and/or flavouring material.

Fig.1

EP 0 269 461 A2

**Description**

## MEAT PRODUCT

This invention concerns an edible meat product, as well as a method of preparing the same.

It is well known that many cuts of meat contain tough interconnective tissue. Such tissue is, in theory, nutritionally good. However, to ensure that such cuts are acceptable for eating, or for digestive reasons, it is desirable either to remove such tough tissue or alternatively to cook the cuts for very long periods to break down such tough tissue and achieve a cooked piece of meat which is tender and easily consumable. If these tougher tissues are cut out and treated as waste there is obviously a loss of weight so that the product becomes more expensive per unit weight. In such cases, therefore, it is usual to find some way of adding the equivalent weight back to the remaining saleable meat. If, on the other hand, the tough interconnective tissues are not removed, the marketable value of the meat is relatively reduced. This is evident from the differences between retail price levels for fore quarter cuts from mammalian carcasses, which fore quarter parts contain relatively high levels of the tougher tissues, and for hind quarter cuts which contain lesser proportions of such tougher tissues.

Grinding, milling, chopping, flaking and like treatments of meat (which may be of mammalian or avian types of species) to enable it to be reformed into a variety of shapes and configurations, all serve to render lesser quality cuts incorporating tougher tissues into forms which are easily consumed. Meats treated by these various methods reach the eventual consumer as minced meats, burgers, sausages and like forms. It follows quite naturally that these products are usually made from fore quarter cuts and, because of their comminuted structure, occupy a specific market slot generally associated with convenience foods, or foods which are usually cooked by grilling or frying. They are not associated with joints and like cuts intended for or suitable for cooking by roasting.

An object of the present invention is to provide an improved method of treating meat which can be applied to fore quarter or like cuts incorporating tougher tissues as above discussed to render such meat to a form or condition comparable with hind quarter cuts, that is to say with the actual muscle thereof kept or maintained in pieces as large as possible and as near as possible in their natural state, but with the tougher tissues being appropriately reduced in their effect, so as to achieve a level of bite and eating equal to or comparable with those of hind quarter meat cuts, in relation to whole muscle or near whole muscle products.

Hitherto known methods used in the manufacture of such products involves removal of the tough interconnective tissues and fatty areas, placing the so-prepared meat into a tumbling and massaging vessel, and adding a solution of water, binders, phosphates (salts), protein extracts, and the like. The meat and the solution are mixed together during a length tumbling period of some hours (e.g. 6 to 12 hours). This results in massaging of the muscle to break down some of its cells and tissue structure and create a spongy structure which absorbs the solution. The purpose of the solution can be manifold, but generally it will primarily be for the purpose of adding water to compensate for the lost value of the removed interconnective tissues, and secondly to interact with protein elements in the muscle during the massaging period to induce their extraction. Such protein extraction assists in rebinding the individual muscle pieces together when the meat is being cooked and thus in providing a cooked product which can be sliced or carved without breaking or crumbling. Furthermore, the adding of any chemically-derived protein additive can assist in reducing cook ing weight loss.

After tumbling of the prepared meat pieces, they are, in the known methods, placed under vacuum and extruded or pushed out into a tubular casing.

As mentioned, the present invention is concerned with producing a similar type of product which so far as possible leaves the muscles whole and uncomminuted, or nearly so.

Pursuant hereto, the present invention provides a method for the preparation of an edible meat product from cuts comprising whole or nearly whole natural muscle and containing tough interconnective tissue, which comprises removing such tough tissue from the muscle pieces, comminuting said tough tissue and converting it into an emulsion with a consumable liquid, applying the emulsion to the muscle pieces so as to form a coating thereon which acts as a binder, and consequently moulding the resultant mass to form a coherent body. Such body is, of course, a reconstituted meat joint which is suitable for cooking, e.g. by roasting, grilling, frying, braising etc.

The proposed method has many advantages compared to the known methods outlined above. Firstly, it is quicker as all that is required is a coating or mixing in of the emulsion instead of hours in the tumbler. Secondly, it is equally effective in that all the weight lost by the original removal of connective tissue is added back, but this is achieved without use of expensive chemical additives. Finally, the appearance of the end product is very natural (i.e. closer to the appearance of a natural piece of meat than products prepared by previous methods) and the original texture of the meat, as favoured by most consumers, is maintained as the product is not massaged and made spongy as in previous methods. Overall, therefore, the method is quicker and less expensive than hitherto and the product is likely to be preferred by consumers.

The moulding of the mass of meat pieces coated with binder into a coherent body may, for instance, simply be effected by extruding. Alternatively, it may be effected by filling the mass, in any suitable way (which may include extruding) into a mould or forming case, with or without the application of pressure as may be desired or necessary.

As a development of the invention, the coherent meat body, after or upon being moulded, may be frozen, in which case the body may then be sliced, the resultant slices being reassembled into lengths or stacks to provide a pre-sliced body which may subsequently be cooked and served without the need for any further cutting or slicing. When the body is sliced, the slices may, of course, be of constant thickness or of thicknesses which differ between slices or groups of slices.

The moulded body, whether or not frozen and pre-sliced, is advantageously further prepared by enrobing it with a basting and/or flavouring material. If it is enrobed with a basting material this may, for instance, be animal fat derived from the same carcass(es) from which the initial cuts, used in the method of the invention, were derived but may be any other basting material such as vegetable fat or mixtures of same. Suitable flavouring materials may comprise sauces or pastes or other spreadable compositions derived from fruits, vegetables, spices and seasonings, e.g. curry sauce, tomato paste, gravy, fruit purees. Similar materials, particularly herbs, spices, and seasonings may actually be incorporated into the basting materials.

A particularly superior and advantageous product is obtained if one uses, as the basting and/or flavouring material, a wrap comprising a combination of collagen and fat/flavouring. Such a wrap may, for instance, comprise one layer of collagen and one layer of fat/flavouring or two collagen layers with a filling of fat and/or flavouring sandwiched therebetween. A pre-sliced meat body produced in accordance with the method of the invention and enrobed with such a wrap, for instance so as to be substantially fully surrounded thereby, can be cooked by roasting in substantially the same way as an ordinary meat joint, and will result in a cooked product consisting of an assemblage of slices which can be distributed to plates without any need for any sustained slicing or carving operations.

The use of a collagen/fat wrap is disclosed in United Kingdom Patent No. 2105168, standing in the name of one of the present inventors. The purpose of the collagen is to maintain the integrity of the fat which has been comminuted. The wrap is proposed to be placed around ordinary meat joints in the same way as a conventional drape or wrap. The fat layer gradually melts away during cooking, leaving the collagen layer or layers adhering to the cooked joint and apart from offering some aesthetic appeal it serves no other purpose when the joint is cooked.

In carrying out the aforesaid development of the present invention, it is proposed more generally to use a wrap consisting of collagen together with fat or other basting substance and/or flavouring substance and the use of such wrap has an unexpected and innovative result. In this respect, if the wrap is applied around the pre-sliced body so as to substantially completely surround the latter, the collagen film will function as a form of restraining spring acting on the slices as the joint is cooking. The heat necessary for cooking will cause the individual slices of the composite joint to undulate, thereby allowing the basting and/or flavouring substance from the wrap to percolate between each slice. This is most important to prevent undue or excessive dehydration to the cooking joint. The collagen film, whilst in a hot and humid state, becomes springy and so holds the composite together, yet has sufficient tension and springiness to allow the slices to open and close together, throughout the cooking. When the cooking is completed, the collagen film becomes dehydrated and crispy, and holds the sliced pieces completely together. It is thus both possible and practicable to make presliced joints of meat available to caterers and this has the advantage of offering a number of economies particularly in reducing cooking time, allowing a frozen pre-sliced joint to be positioned ready for cooking without the need to de-frost, and better control of the temperatures required to kill off any harmful bacteria. It also allows for predetermination of the number of slices to be used per serving and thus the cooking only of a precise quantity matched to any specific catering requirement, and the exact cost of the roasted slices can be calculated.

The invention includes within its scope, of course, an edible meat product produced by the method aforesaid.

The following description, partly with reference to the accompanying drawing, serves to illustrate a preferred way of carrying the method of the invention into effect. In the drawing:-

Fig. 1 is a diagrammatic perspective view illustrating a moulded edible meat body produced in accordance with the invention;

Fig. 2 is a view comparable with Fig. 1, but showing the body having been frozen and sliced; and

Fig. 3 is a view comparable with Fig. 2, but showing the sliced body in the course of being enrobed with basting material.

In carrying out the exemplified method, one takes a selected primal cut, say from the shoulder or a fore quarter of beef and removes or trims to an approved standard, the usual interconnective tissues of skin, gristle, tendons, etc., which lie on or encapsulate the muscle structure. The large muscles are then reduced to fist-size pieces which are placed into a paddle mixer or vacuum tumbler.

The trim tissues are put into a high speed cutter, and water is added, as an emulsion-forming liquid, to an amount up to ten percent (10%) of the weight of the trim. The cutter reduces the trim/liquid mixture to an emulsion which is then poured onto the muscle meat within the mixer or tumbler.

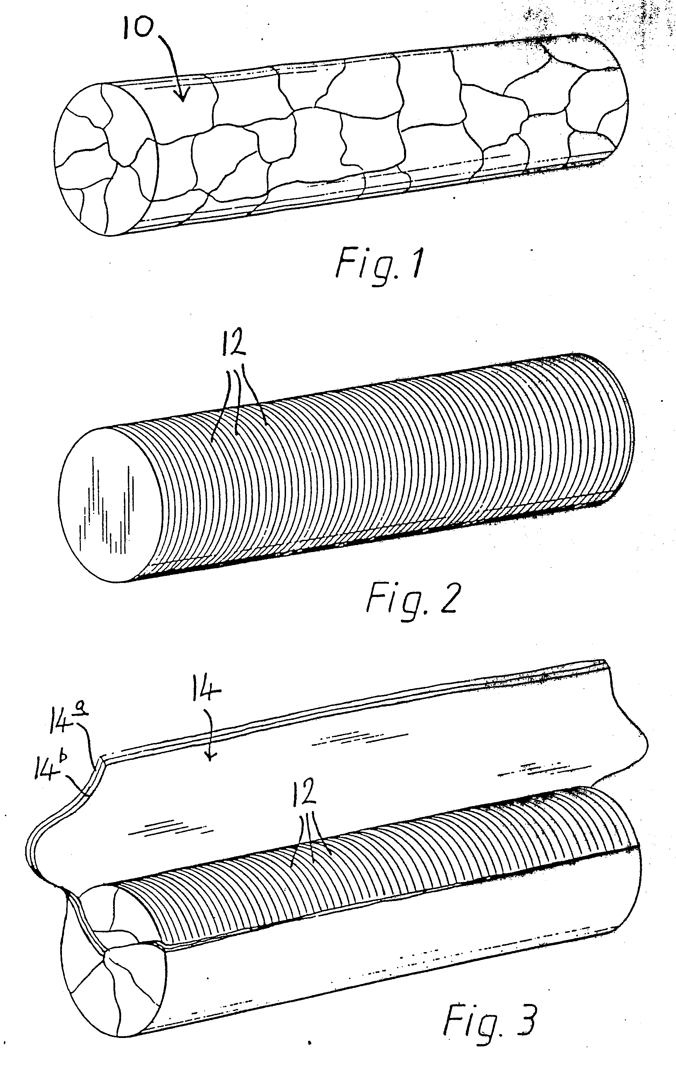

The muscle and emulsion mixture is now mixed or tumbled for a short period, probably of only a few minutes, sufficient to ensure that complete and thorough coating of the muscle pieces with the emulsion takes place. The resultant emulsion-coated meat mass is now introduced into a mould or casing. If the meat mass is to be blast frozen the temperature should be reduced, for example down to the range from -15°C to -20°C. A solid coherent body such as is indicated at 10 in Fig. 1 is thereby obtained.

Thereupon, a shown in Fig. 2, the body is sliced or carved, so as to form it into slices 12, the number and thickness of which can, of course, be selected as may be desired. Thus, the slicing can be effected with constant slice thickness, or different parts of the body can be sliced to different thickness, for instance according to how the product is eventually to be used. The slices are now reassembled to make up a composite of desired length or weight ready for enrobing with a basting drape 14 to be carried out as shown in Fig. 3. The basting drape 14 should preferably be of sufficient length to extend well over the ends of the sliced body to create the effect of almost complete encapsulation. The low temperature of the body will, of course, freeze the basting drape 14 on contact and the two become integrated.

As will be understood, the basting wrap 14 preferably comprises a collagen film 14a carrying a layer of basting material 14b or a pair of such films with a layer of such material sandwiched therebetween, such as has been described in the specification of U.K. Patent No. 2105168. When the enrobed sliced body is cooked by roasting, which can be effected without prior defrosting the product, each slice becomes cooked individually, the slices separating and closing up under the influence of the resilience of the collagen of the wrap to permit liquid baste to enter therebetween and ensuring proper cooking all through the entire thickness of the body.

It will be appreciated that the freezing and also the subsequent slicing and enrobing of the product is optional and not essential to the invention, and that the product of the method of the invention, in its simplest form may merely comprise the muscle pieces bound together by the trim-based emulsion as exemplified by figure 1 of the drawings. Such a product may be shaped, for instance, by extrusion instead of moulding as above described, but of course, other practical methods of forming the edible meat body in its coherent form may be employed.

If the body is enrobed, the wrap need not be a basting wrap, as specifically referred to, but may comprise collagen film together with flavourings in the form of sauces or pastes made from fruits, vegetables, spices, seasonings. Alternatively such flavourings may be incorporated into the fat or other basting material.

## Claims

1. A method of preparing an edible meat product from cuts comprising whole or nearly whole natural muscle containing tough interconnective tissue, said method comprising removing the tough tissue from the muscle pieces, comminuting said tough tissue and converting it into an emulsion with a consumable liquid, applying the emulsion to the muscle pieces so as to form a coating thereon which acts as a binder, and consequently moulding the resultant mass to form a coherent body.

2. A method as claimed in claim 1 wherein the consumable liquid is water.

3. A method as claimed in claim 1 or 2 wherein the moulding is effected by extruding.

4. A method as claimed in claim 1, 2 or 3 comprising the further steps of freezing and subsequently slicing the coherent meat body. and then reassembling the resultant slices into lengths or stacks to provide one or more pre-sliced bodies.

5. A method as claimed in any preceding claim wherein the coherent meat body or the pre-sliced body, respectively, is enrobed with a basting and/or flavouring material.

6. A method as claimed in claim 5 wherein the basting and/or flavouring material consists of a wrap comprising a combination of collagen and a basting and/or flavouring substance.

7. A method as claimed in claim 6 wherein the wrap comprises either one layer of collagen and one layer of basting and/or flavouring substance, or two collagen layers with a filling of basting and/or flavouring substance sandwiched therebetween.

8. A method as claimed in any of claims 5, 6 or 7 wherein a basting material is used for enrobing and consists of or includes animal fat derived from the same carcass(es) as the initial cuts of meat.

9. A method as claimed in any of claims 5, 6 or 7 wherein a flavouring material is used for enrobing and consists of or includes a sauce or paste or other spreadable composition derived from fruits, vegetables, spices, and/or seasonings.

10. An edible meat product produced in accordance with the method claimed in any preceding claim.

0269461

Fig. 1

Fig. 2

Fig. 3